# EUROPEAN PATENT APPLICATION

(11) **EP 2 685 707 A1**
(43) Date of publication of application: **15.01.2014**
(21) Application number: 13003346.7
(22) Date of filing: 02.07.2013
(51) Int. Cl.: H04N 5/232

(54) **System for spherical video shooting**

(30) Priority: 12.07.2012 IT RM20120329
(71) Applicant: Virtualmind di Davide Angelelli, 00125 Roma (IT)
(72) Inventor: Angelelli, Davide, 00125 Roma (IT)
(74) Representative: Garavelli, Paolo

(57) **Abstract**

A system is described whose function is recording, producing and sending to remote devices spherical videos in real time for a 360° spherical video-shooting which can remotely displayed, composed of: a carrier structure (3, 5, 6); a connection cable (7) to an external personal computer; an electronic part composed of a microchip for recording, modifying, editing, storing, synchronising and transferring data in real time through a wireless module or the connection cable (7); at least two electronic, high-definition video-cameras (2), for creating spherical photos and videos, wherein this system is designed at the same time to record in stereoscopic mode and to produce already edited images between the various optics in real time, with the chance of cancelling the video image distortion in order to produce the effect of a lens with two optical centres, thereby producing in a pentagonal shape two images from a single video-camera objective for the stereoscopic view.

## Description

The present invention deals with a system for spherical video-shooting. An innovative function of this system is recording, producing and sending to remote devices spherical videos in real time. In particular, the subject matter of the invention is recording video images and contents at 360° in an "immersion" mode, namely a system which provides for several video-cameras which are coupled and with a geometric arrangement of their photo-camera elements.

The limit of modern video-cameras is recording videos with a rather narrow vision angle, losing the chance of recording many important particulars. It is still more difficult to train the optics to also shoot the rear part with respect to the shooting part thereof at that time.

Classical shootings typically used for Planetary are created in order to provide the illusion of placing the public in an immersion environment, for example in open air during a night with stairs, with the sky which fills the whole curved field of view. The classical image recorded by current video-cameras with an optimum objective is produced at 30 photo-grams per second with photographic objectives having a circular shape, because the greatest distortion is the loss of resolution and this typically occurs for the distance from the optical centre, namely on the perimeter image points. This image is usually cut with a rectangular shape, traditionally derived from the shape of paintings and a theatre scene. However, the majority of the useful surface is therefore wasted. A rectangular photo with an aspect ratio of 1:1.85, used for moving images, cannot but comprise 53% of this circular area.

The most relevant prior art documents for the present invention are: US-A-7710463, US-A1-2009/0278917 and US-A-7003136.

Object of the present invention is solving the above prior art problems, by providing a system for spherical video-shooting which can be used in the motion-pictures field, in video-surveillance, in advertising spots, in the security field, for video inspections in inaccessible or contaminated places, in the military field on board of drones or as parachuted probe. Such system refers to the field of recording images and videos, more particularly of the digital recording of 360° panoramic images and videos; a particular variation allows immersion and stereoscopic shooting, namely a system of video-cameras to record a 360° 3D panoramic field of view in digital mode. The system in fact is composed of a plurality of video-cameras, which, when coupled, allow obtaining the stereoscopic view: they capture image data covering a whole 360° panorama to create sequences of 3D immersion images and videos 3D, a 3D motion-picture or panoramic animation, even of the stereoscopic type.

The appearance of optics of new digital video-cameras with increasing resolution and of a photographic quality from 5 to 10 or more megapixels, together with the always increasing computer speed and processing power, has put the basis for three-dimensional videos, 360° shooting systems, video-cameras which are able to capture image and video data for creating three-dimensional images for films and immersion animation.

In particular, the USB 3 protocol has been used here, but the system is already pre-set for accepting video flows with a higher speed, the video flow coming from different optics being edited in a single image by the processor on board the video-camera and recorded in the storage memory present on board or sent to remote devices through high speed wireless. Films shot with this innovative technology have been made for a presentation on flat screens, that can be used in theatres with semi-spherical dome, because when videos are created for a flat screen and then shown on a curved surface like a dome, the film, having been shot with the technology of classical video-cameras, unfortunately distorts the produced image.

In order to create the illusion of a continuous frame and fill the interior of a half-sphere, it is necessary to shot images with suitable sets of video-cameras covering the whole field of view, namely appropriate images for such half-curved, cylindrical, semi-spherical screen, which are the technologies of the present invention. Therefore, the important and relevant technical innovation of the present invention is creating spherical 3D videos, namely a system which comprises several video-cameras, which are two or more, modular and assembled on a structure, for example shaped as a sphere, pentagon or dodecahedral, in order to shoot in video mode the whole panorama spherically surrounding at 360° with respect to the shooting spot.

Video-shooting, differently from other current systems, are afterwards edited in real time by software on board the video-camera microprocessor, and the following high-resolution video projection provides the result of a film which, in this case, has no visual distortion any more, in order to capture and give the impression for a user of a total immersion environment, like in a spherical dome, providing the perception of being immersed into the shooting, as it is perceived by a viewer in reality, without being aware of the optical distortion. This because the system with two or more high-definition optics with 2 or more megapixels has shot in real time the whole 360° optical field.

With respect to existing solutions, the system of the present invention has the peculiarity of having a unique shooting system with wide-angle optics, being able at the same time to record in stereoscopic mode and produce images already edited among the different optics in real time, with the capability of remotely transferring them through real time wireless to remote devices. The contents are anyway stored in an on-board memory card. Moreover, the system is equipped with a GPS module for localization, namely for tracking the movements of performed shootings in order to produce analyses with respect to the performed route, and with a telemeter which takes care of recording necessary data for having distance parameters.

The above and other objects and advantages of the invention, as will appear from the following description, are obtained with a system for spherical video-shooting as claimed in claim 1. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:

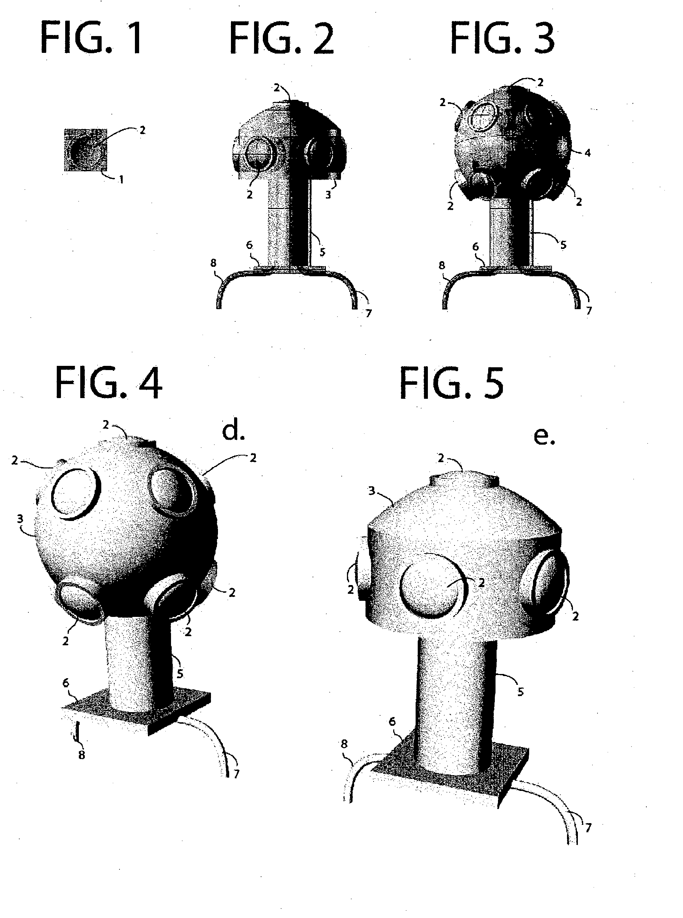

- Figure 1 shows an embodiment of the electronic basic system on a printed circuit and micro-camera with digital optics;
- Figure 2 shows a front view of an assembled pentagonal system with six optics;
- Figure 3 shows a front view of an assembled dodecahedral system with eleven optics;
- Figure 4 shows a perspective view of an assembled pentagonal system with six optics;
- Figure 5 shows a perspective view of an assembled dodecahedral system with eleven optics;

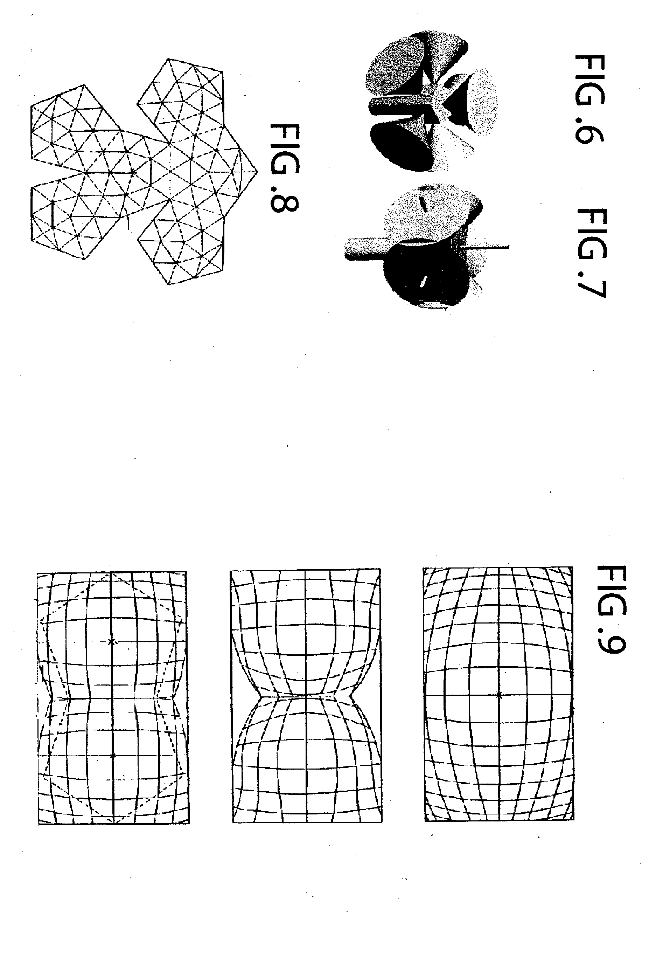

- Figures 6 and 7 shows another embodiment in a perspective view of a pentagonal and dodecahedral assembled system with six and eleven optics for a semispherical version at 180x360° and 180x360 stereoscopic°;
- Figure 8 shows a union diagram of the various recorded videos in a pentagonal shape, when edited in a single spherical panoramic video image at 360°;
- Figure 9 shows the portion of recorded images which is processed and edited;
- Figure 10 is an electric diagram of the communication interface between video-cameras, computer and related video outputs for I/O interfaces;
- Figure 11 is a block diagram of the main steps of the method performed by the system of the invention;
- Figure 12 is a schematic view of a possible operating environment in which the system of the present invention is able to be connected to the outside world through its wireless and Bluetooth modules;
- Figure 12a is an example of an image recorded by a video-camera;
- Figure 12b is an example of an image recorded by a video-camera adjacent to the video-camera of Figure 12a;
- Figure 13 is an example of the parts recorded by the adjacent video-cameras of Figures 12a and 12b, which are overlapping and therefore similar in some areas; and
- Figure 14 is an example of merging two images recorded by the adjacent video-cameras of Figures 12a and 12b after having removed the overlapping areas.

The system for spherical video-shooting of the present invention is substantially composed of the following components:
1 - microchip;
2 - wide-angle optics / digital thermal or laser video-cameras with 2 megapixels or more;
3 - chassis-type supporting structure, preferably made of aluminium or composite material containing electronics and one or more optics;
4 - chassis-type supporting structure, preferably made of aluminium or composite material containing electronics and multiple optics coupled in pairs for every shooting quadrant (in the stereoscopic version);
5 - extensible tube for assembling, with a preferable excursion of 5-25 cm;
6 - supporting plate for assembling;
7 - data transport cable, in particular of the USB3 type or more;
8 - supply cable, in particular, but not in a limiting way, with 12 V.

The invention deals with a system comprising at least two optics which create a mono-directional video-photo-camera, a system for recording images and videos which can be used to create a 3D, 360° immersion environment, even of the stereoscopic type. The system uses at least two video-cameras, with preferable variations also with six or eleven video-cameras; if it is in a 3D stereoscopic version, its optics have a resolution > 2 megapixels and a shooting angle > 100°, organised with fields in a visual overlapping, to capture data from images covering the whole scene at 360°, oriented in such a way as to provide a shooting overlapping of at least 15°.

Collected data are processed by the microchip on board the device, which records data from different video-cameras that can be sent in real time to remote devices, through a wireless interface or a USB3 cable or with a technology with a wider pass-band. The system of video-cameras can be used to create a 3D model taken from the real world of a 360° scene, using the image data triangulation in the vision overlapping fields.

Inside the object, there are also a microphone to shoot in stereophonic mode the shot environment sound and a geo-locator (GPS).

Another technical aspect of the present invention is disclosing a system of modular video-cameras with interchangeable parts, wherein a configuration is enough to photograph a whole hemisphere of visual field; moreover, it is possible to perform shootings with an operator and a single video-camera, which can be easily transported on a shoulder, in cars, airplanes, drones, helicopters, or other moving devices given its very small sizes and weight.

Such system preferably comprises: a spherical case made of plastic or composite material or aluminium, whose diameter is approximately 10 cm, inside which at least two video-cameras are housed; it has two turning on/off keys, which can also be driven remotely, a microprocessor which takes care of joining in a single video image or flow those images which are produced by digital optics, each one of such video-cameras having a lens attached thereto placed inside the housing and oriented towards different directions to acquire image data at 130° or 180° assuming that only two optics are present, with respect to the apparatus centre; at least one microphone to acquire audio data corresponding to acquired image data; a system memory; and related software instructions for operating the photo-camera.

In particular, the microprocessor has executable functions and recorded data merging algorithms, and comprises the steps of:
- acquiring images;
- once having started the acquisition sequence, synchronously transferring image data from the plurality of video-cameras;
- acquiring audio data from the microphone at least in synchronism with the image data acquisition;
- processing the acquired data from the different video-cameras whose field of vision and related recorded image are then overlapped by about 5-20°;
- assembling, through the microprocessor, coded data of single images and acquired audio data, to provide the result of a spherical image resulting from the union of various mutually joined optics;
- generating a spherical video file; and
- saving the spherical video file in the internal memory of the system apparatus;
- possibly sending images through the wireless module, which is also adapted to be used as hotspot module to give access to other devices or operate as radio bridge among many similar apparatuses.

The system is resistant to water up to pressures of 10 atmospheres; it is further resistant to adverse weather conditions and chemical and bacteriological agents. It further has the possibility of being connected to a flexible tube in order to be moved inside a human body, inspected video ducts or to be moved in the video-surveillance application.

A microprocessor on board the video-camera, through algorithms, takes care of processing data acquired from video-cameras: cutting data acquired from the first, second and possibly third video-camera; scaling data acquired from the two or more video-cameras; rotating data of produced images; then adjusting one or more visual properties of the images, rotating them, changing their exposure, colour, brightness and contrast and afterwards joining them in a single photo-gram by overlapping every image by about 20%. Such photo-grams produced by the on board processor 30 times per second generate a fluid video visible through an external visor; the video-camera system has a data detector on board for telemetry of acquired data, and transfers data outside through a physical port and through a wireless module, with a transfer speed of at least 1 gigabyte per second. This laser detector can also be used as lighting device for tracking objects or moving means.

The system comprises a slot for cards to accept a memory card where image data are stored; it further comprises a wireless module, wherein the microprocessor has executable instructions comprising the function of transmission of spherical videos to remote devices, PCs, tablets, Internet, and cellular phones.

The system further comprises a small parachute actuated by an accelerometer: the parachute gives the system the chance of being released in arduous territories or areas, or where a territory has to be remotely pun under video-surveillance.

A gyroscope is further provided to determine the rotational acceleration: these data are stored as rotation metadata.

The system further comprises a Global Positioning System (GPS), to determine position changes of the photo-camera system when moving the photo-cameras: these data are stored as GPS global position metadata, and can afterwards be analysed to produce graphs or diagrams.

The system further has, in its ROM memory, an algorithm to display spherical video files in which the directional sound created by the photo-camera is present; shot videos are transferred in wireless mode to a display of spherical videos. Such display is driven by a computer, generating for the processing system, a three-dimensional video on which one can navigate with a mouse or in touch-screen mode in a virtual navigating environment.

In a preferred solution, the system weighs about 600 g, including chassis, optics and electronics; its preferable diameter sizes are about 10 cm, and in the endoscopic version about 4 cm.

The system of the invention is preferably adapted to operate in wells or ducts; areas subjected to natural calamities, earthquakes, seismic events or volcanic events; areas subjected to geologic studies or speleology; area subjected to video-surveillance; very small ducts; or as endoscopic probe inside a human body in its miniaturised version; as parachuted probe to remotely put under video surveillance a wire area; and all those places inaccessible for a human eye.

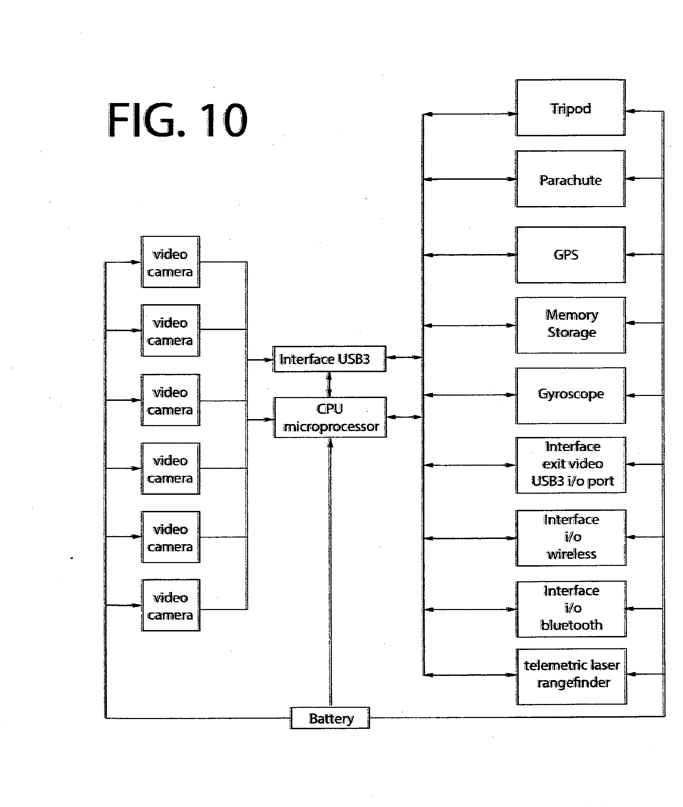

Summarising, with reference to Figure 10, an electronic diagram is shown of a preferred, but not limiting, embodiment of the communication interface between video-cameras, computer and related video outputs for I/O interfaces. The different optics are supplied by the battery and are connected through USB3 interface or more to the microprocessor, which takes care of recording image sequences, mofidy their brightness and focus exposure, check the portions of recorded video to see whether they overlap, establish check spots, verify them and edit the various images in a single (video) panoramic image at 360°.

The microprocessor is connected to various peripherals, which are supplied by the same battery, and are:
- at least one module for recording telemetry data: it is a laser telemeter able to light objects for laser sighting and tracing a destination route;
- at least one Bluetooth I/O interface module;
- at least one wireless I/O interface module for transferring sequences of images to remote devices and for remotely checking the system: it also operates in hot-spot mode with the function of connecting other devices to remote networks or operate as radio bridge;
- at least one module and related port with USB3 interface or more;
- at least one gyroscope;
- at least one storage memory, on an internal card removable through a suitable port;
- at least one GPS module;
- at least one parachute;
- at least one tripod.

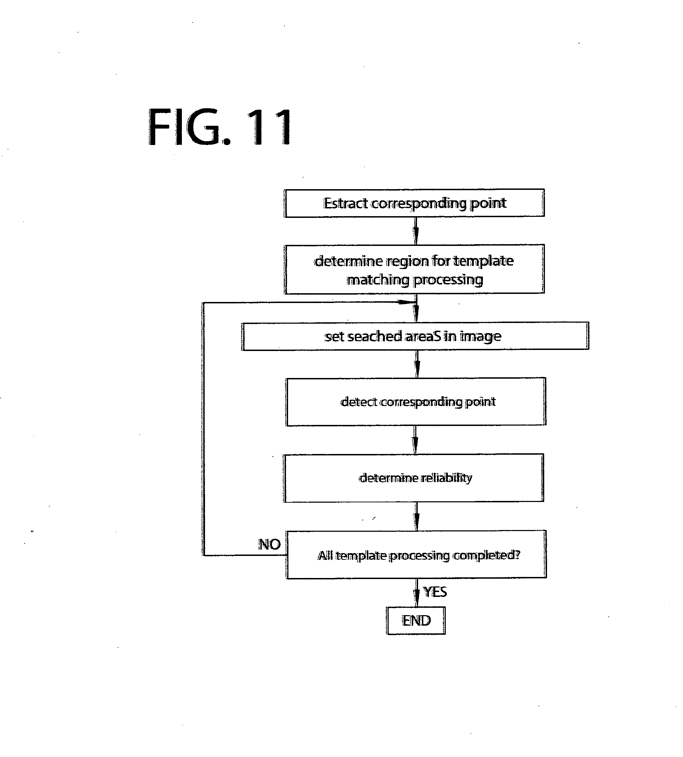

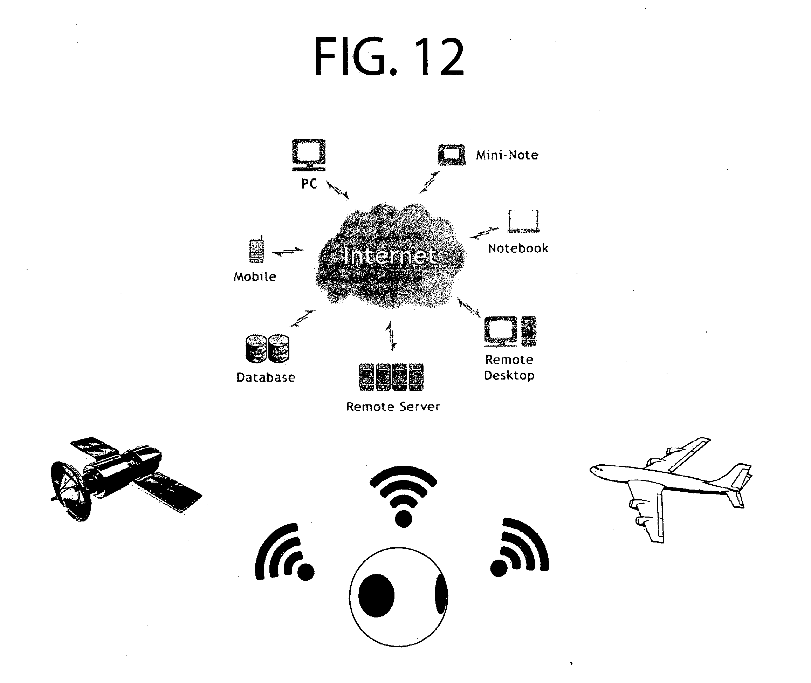

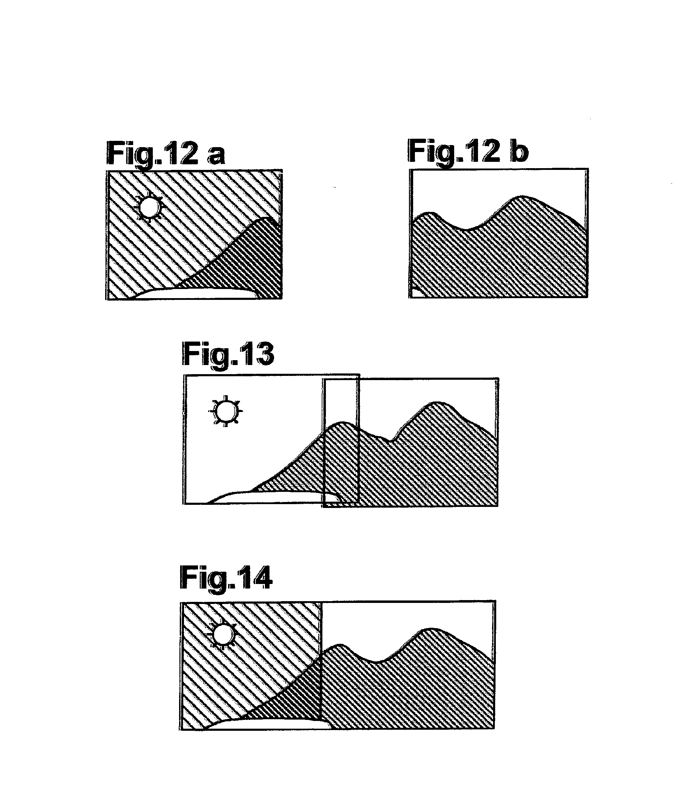

With reference to Figure 11, the microprocessor is further equipped with instructions to perform the following steps:
- locating and extracting check spots in parts of overlapping images as shown in Figures 12a, 12b and 13;
- determining corresponding regions for processing;
- setting the check spots;
- checking the corresponding spots; and
- determining a reliability of check spots.

Summarising, the peculiarity of the present invention is the recording in real time of the whole world surrounding us, joining the shootings of various optics and cancelling the video image distortion, in order to produce the effect of a lens with two optical centres, thereby producing, in the pentagonal or spherical form, an omnidirectional vision, and, in the version with double optics on different shooting angles, two images from a single video-camera objective (for the stereoscopic view). Acquired data can also be used for creating two-dimensional panoramic images with various configurations of audio-video compression, this to provide the operator with the chance of viewing the whole visual field, even what cannot be perceived behind, above and below him at a single time, and a single image or video differently from what occurs in human eyes which has a field of vision of about 90°.

The sequence of generated images or videos is then sent through the wireless module on board the apparatus, and, through a suitable software, can be used on normal personal computers, touch-screen devices or through Internet, with an application which makes the whole scene adapted to be navigated at 360°.

Video-cameras are oriented in a radial way with respect to a structure made of aluminium. Every video-camera has a field of view > 90°, which is overlapped with the field of view of the digital optics adjacent thereto. Video-cameras are assembled in a housing and their accurate geometry is determined by a calibration process: they are driven simultaneously with a synchronisation of about 1-2 ms or less, to capture the various images. The video-camera digital optics, in order to create a stereoscopic vision, are configured as stereoscopic couples, and are oriented so that every stereoscopic couple captures a separate quadrant of the 360 degrees of the total visual field. The stereoscopic visual field is the region, which is visible for both photo-cameras in a stereoscopic couple, where their visual field is overlapped. The visual field of the video-cameras being used determines the amount of overlapping of the various cameras to create the stereoscopic view. Video produced by the video-camera digital optics are sent through a firewire USB3 interface to the microprocessor of a computer which manages the various images and stores them in real time in a storage.

## Claims

1. System for a 360° spherical video-shooting adapted to be remotely displayed, said system being composed of:
- a carrier structure (3, 5, 6); and
- at least one connection cable (7) going out of said carrier structure (3, 5, 6,);
**characterised in that** it further comprises:
- at least two electronic, thermal or laser high-definition video-cameras (2), for creating spherical photos and videos, wherein said system is designed at the same time to record in stereoscopic mode and to produce already edited images between the various video-cameras (2) and transfer them in real time to remote devices through a wireless module present inside the carrier structure (3, 5, 6), with the chance of cancelling a video image distortion in order to produce the real effect of a lens with two optical centres, thereby producing in a pentagonal shape two images from a single video-camera objective for a stereoscopic view; and
- an electronic part composed of a microchip designed for editing and modifying images recorded by the various video-cameras (2), for storing on an internal memory, for receiving data from connected device, such as a Global Positioning System, GPS, an accelerometer, a telemeter, for synchronising and transferring data through the wireless mode or the connection cable (7);
- wherein said cable (7) is used for a connection to external devices through an interface with USB3 standard or more.

2. System according to claim 1, **characterised in that** it is adapted to operate in wells or ducts; areas subjected to natural calamities, earthquakes, seismic events or volcanic events; areas subjected to geologic studies or speleology; area subjected to video-surveillance; very small ducts; or as endoscopic probe inside a human body in its miniaturised version; as parachuted probe to remotely put under video surveillance a wire area; and all those places inaccessible for a human eye, said system being further designed to also record an audio signal, a GPS positioning, telemetry data, with a transfer of recorded images through Wi-fi or Bluethooth to other devices.

3. System according to claim 1 or 2, **characterised in that** said system further comprises:
- a parachute suitable to be opened by an accelerometer when it is parachuted, to be then detached when the system rests on the ground by resting on a support which can also be opened;
- two keys for turning on/off, which are also adapted to be remotely driven;
- a microprocessor which is designed to merge in a single image the two or more video flows generated by the video-cameras through algorithms inside the microprocessor,
- each one of the video-cameras having a wide-angle lens > 100° attached thereto, placed inside the carrier structure (3, 5, 6), the video-cameras being oriented along different directions to acquire image data at such an angle as to overlap the recorded images by at least 15-20% with respect to a centre of the carrier structure (3, 5, 6).

4. System according to any one of the previous claims, **characterised in that** said system further comprises:
- at least one an accelerometer and at least one gyroscope to determine a rotational acceleration as data which are stored as rotation metadata;
- at least one wireless module, also adapted to be used as hotspot module to give access to other devices or operate as radio bridge among many similar apparatuses;
- optionally, at least one Bluetooth module;
- at least one laser detector of telemetric data, which can also be used as lighting device for tracking objects or moving means, comprising a slot for cards for accepting an additional storage card where image or video sequences are stored;
- at least one data output and input port;
- at least one stereophonic microphone to acquire audio data corresponding to acquire image data;
- at least one memory for storing data;
- at least one microprocessor designed to perform the functions of merging images through algorithms, storing images and transmitting data in a wireless or physical mode through a cable.

5. System according to claim 4, **characterised in that** said microprocessor has stored executable instructions adapted to perform the following steps:
- acquiring images;
- once having started the acquisition sequence, synchronously transferring at least image data from the plurality of video-cameras;
- acquiring audio data from the microphone at least in synchronism with the image data acquisition;
- processing the acquired data from the different video-cameras whose field of vision and related recorded image are then overlapped by about 5-20°;
- assembling, through the microprocessor, coded data of single images and acquired audio data, to provide the result of a spherical image resulting from the union of various mutually joined optics;
- generating a spherical video file; and
- saving the spherical video file in the internal memory of the system apparatus.

6. System according to claim 4 or 5, **characterised in that** the microprocessor is further equipped with instructions to perform the following steps:
- cutting data acquired from the first, second and possibly third video-camera and so on;
- scaling data acquired from the two or more video-cameras;
- rotating data of images produced by the video-cameras;
- intercepting similar spots in every image in overlapping areas;
- checking similar spots;
- adjusting one or more visual properties of images, rotating them, changing their exposure, colour, brightness and contrast, and afterwards merging them in a single photo-gram, such photo-grams produced 30 times per second generating a fluid vide which can be seen by remote devices.

7. System according to any one of the previous claims, **characterised in that** it further comprises:
a memory card fastened onto a microchip, and a wireless module in which the microprocessor has executable instructions comprising a function of transmitting spherical views to a remote system through the wireless module.

8. System according to any one of the previous claims, **characterised in that** it further comprises at least one Global Positioning System, GPS, to determine position changes of the photo-camera system when moving the photo-cameras, these data being stored as GPS global position metadata.

9. System according to any one of the previous claims, **characterised in that** it further comprises, inserted in its system ROM memory, an algorithm for editing spherical video files in which there is a directional sound created by the photo-camera, shot videos being transferred in wireless mode to a display of spherical videos, said display being run on remote devices, cellular phones, tablets, PCs or the like, for the processing system, a three-dimensional video on which one can navigate with a mouse or in touch-screen mode in a virtual navigation environment.

10. System according to any one of the previous claims, **characterised in that** it comprises at least six digital optics (2) inserted in said carrier structure (3), five of said digital optics (2) being arranged on axis X at the same radial distance one from another, and one of said digital optics (2) being arranged on axis Z perpendicularly to axis X.

11. System according to claim 10, **characterised in that** optics have wide-angles, have a shooting field greater than 100°, so that merging of the various recorded shootings by every optics has a visual field which is overlapped by at least 15% from the adjacent video-camera optics, to create a stereoscopic vision, being configured as stereoscopic couples, and being oriented so that every stereoscopic couple captures a separate quadrant of the 360 degrees of the total visual field, the stereoscopic visual field being the region which is visible to both photo-cameras in a stereoscopic couple, where their visual field is overlapped, the visual field of the video-cameras being used determining the amount of overlapping of the various cameras to create the stereoscopic vision.

12. System according to any one of the previous claims, **characterised in that** the microprocessor is further equipped with instructions to perform the following steps:
- locating and extracting check spots in parts of overlapping images;
- determining corresponding regions for processing;
- setting the check spots;
- checking the corresponding spots; and
- determining a reliability of check spots.
